Europäisches Patentamt

European Patent Office

Office européen des brevets

(11) Veröffentlichungsnummer: **0 456 145 A1**

(12) **EUROPÄISCHE PATENTANMELDUNG**

(21) Anmeldenummer: 91107284.1

(51) Int. Cl.5: **B65G 17/06**

(22) Anmeldetag: 06.05.91

(30) Priorität: 11.05.90 DE 4015118

(43) Veröffentlichungstag der Anmeldung:
13.11.91 Patentblatt 91/46

(84) Benannte Vertragsstaaten:
AT BE CH DE DK ES FR GB GR IT LI NL SE

(71) Anmelder: JONGE POERINK B.V.
Prins Bernhardlaan 51
NL-7620 AA Borne(NL)

(72) Erfinder: Poerink, Nicolaas Jonge
Pr. Bernhardlaan 25
NL-7622 BD Borne(NL)

(74) Vertreter: Schulze Horn, Stefan, Dipl.-Ing.
M.Sc.
Goldstrasse 36
W-4400 Münster(DE)

(54) Förderband.

(57) Förderband (1), bestehend aus wenigstens zwei zueinander parallelen, endlos umlaufenden, durch Kettenräder antreibbaren Ketten (2, 2', 2") mit jeweils einer Anzahl von einander übergreifenden Kettengliedern (20) sowie aus einer Anzahl von quer zu den Ketten angeordneten Tragstäben (3), wobei die Enden (31, 32) der Tragstäbe als Scharnierstifte für die Kettenglieder dienend diese durchdringen und wobei der dazwischen liegende Bereich der Tragstäbe als Tragbereich (30) des Förderbandes dient, wobei zum besseren Antrieb in den Kurven
- zwei Ketten (2, 2') als Doppelkette direkt nebeneinander verlaufend die eine Längsseite des Förderbandes bildet,
- eine dritte Kette (2") als Einzelkette die andere Längsseite des Förderbandes bildet,
- die Doppelkette eine feste Teilung aufweist und
- die Einzelkette eine veränderliche Teilung mit in Förderbandlängsrichtung begrenzt gegeneinander verschieblichen Kettengliedern aufweist.

Fig.1

EP 0 456 145 A1

Die Erfindung betrifft ein Förderband, welches aus wenigstens zwei zueinander parallelen, endlos umlaufenden, durch Kettenräder antreibbaren Ketten mit jeweils einer Anzahl von einander übergreifenden Kettengliedern sowie aus einer Anzahl von quer zu den Ketten angeordneten Tragstäben besteht, wobei die Enden der Tragstäbe als Scharnierstifte für die Kettenglieder dienend diese durchdringen und wobei der dazwischenliegende Bereich der Tragstäbe als Tragbereich des Förderbandes dient.

Derartige Förderbänder sind bekannt und werden insbesondere im industriellen Bereich verbreitet für innerbetriebliche Transportaufgaben eingesetzt. Es wird verwiesen auf die DE-GM 89 00 158.3, in der ein Förderband beschrieben wird, welches zwei die Längsseiten des Förderbandes bildende, in einem bestimmten Abstand zueinander parallel laufende Ketten aufweist. Zur Vergrößerung der Tragfläche sowie zur Ermöglichung rationeller, automatischer Be- und Entladung der Tragfläche sind die zwischen den Ketten angeordneten Tragstäbe derart ausgebildet, daß sie auf den Kettengliedern aufliegend quer über diese hinweggeführt sind. Ihre U-förmig umgebogenen Enden durchdringen die Kettenglieder von außen. Der Antrieb erfolgt bei geradlinigem Verlauf beidseitig über Kettenräder, in Kurven ist aufgrund der Stauchung der Kettenglieder der an der Kurveninnenseite liegenden Kette nur ein einseitiger Antrieb an der an dem Außenradius der Kurve liegenden Kette möglich.

Im allgemeinen haben sich solche Förderbänder bewährt, jedoch hat sich in der Praxis als nachteilig herausgestellt, daß die Förderbänder in Kurven nur einseitig angetrieben werden können. Gerade in den Kurven ist aufgrund der vergrößerten Reibungsverluste ein stärkerer Antrieb vonnöten als in geraden Streckenabschnitten, wodurch bei einseitigem Antrieb die eine Kette mechanisch sehr stark belastet wird und einem verstärkten Verschleiß unterliegt.

Aufgabe vorliegender Erfindung ist es, ein Förderband der eingangs genannten Art zu schaffen, welches einen zuverlässigen, verschleißarmen Betrieb gewährleistet.

Die Lösung dieser Aufgabe gelingt erfindungsgemäß durch ein Förderband der eingangs genannten Art, welches dadurch gekennzeichnet ist, daß zwei Ketten als Doppelkette nebeneinander verlaufend die eine Längsseite des Förderbandes bilden, daß eine dritte Kette als Einzelkette die andere Längsseite des Förderbandes bildet, daß die Doppelkette eine feste Teilung aufweist und daß die Einzelkette eine veränderliche Teilung mit in Förderbandlängsrichtung begrenzt gegeneinander verschieblichen Kettengliedern aufweist.

Vorteilhaft ermöglicht die Doppelkette auf geraden Förderbandabschnitten einen platzsparenden, kostengünstigen einseitigen Antrieb über ein als Doppelrad ausgebildetes Kettenrad mit nur einem gemeinsamen Antriebsaggregat, ohne daß eine Überlastungsgefahr entstehen kann. In Kurvenabschnitten ermöglichen die feste Teilung der Doppelkette am Innenradius der Kurve sowie die veränderliche, sich dem vergrößerten Außenradius anpassende, Teilung der Einzelkette einen beidseitigen, leistungsfähigen Antrieb, wodurch die bisher auftretende einseitige Überbeanspruchung vermieden wird.

In einer weiteren vorteilhaften Ausgestaltung können die zwischen den Kettenanordnungen befindlichen Tragstäbe auf der Oberfläche der Kettenglieder aufliegend über diese nach außen hinwegragen und U-förmig an den Enden umgebogen die Kettenglieder von außen durchdringen, wodurch die Förderband-Tragfläche breiter und stufen- und kantenfrei wird.

In einer weiteren vorteilhaften Ausgestaltung können die Tragstäbe im Tragbereich mit einem Gittergeflecht überzogen sein, um den Transport von druckempfindlichen Gütern oder Gütern geringer Größe zu ermöglichen, welche ansonsten zwischen den Tragstäben hindurchfielen.

Weitere Ausgestaltungen und vorteilhafte Weiterbildungen der Erfindung gehen aus den Unteransprüchen 2 bis 4 sowie 7 bis 10 hervor.

Im folgenden werden Ausführungsbeispiele der Erfindung anhand einer Zeichnung erläutert. Die Figuren der Zeichnung zeigen:

Figur 1 — einen Abschnitt eines Förderbandes in einer ersten Ausführung in Aufsicht, wobei die linke Teilzeichnung eine Kurvensituation, die rechte Teilzeichnung eine Situation bei geradem Streckenverlauf wiedergibt,

Figur 2a — ein Kettenglied einer Doppelkette als Detail des Förderbandes in perspektivischer Darstellung,

Figur 2b — ein Kettenglied einer Einzelkette als Detail des Förderbandes in perspektivischer Darstellung,

Figur 3 — einen Abschnitt einer weiteren Ausführung des Förderbandes in Aufsicht, wobei die linke Teilzeichnung eine Situation bei geradem Streckenverlauf, die rechte Teilzeichnung eine Kurvensituation darstellt, und

Figur 4 — einen Abschnitt einer dritten Ausführung des Förderbandes in Aufsicht, wobei die Teilzeichnungen Situationen analog zu denen in Figur 1 darstellen.

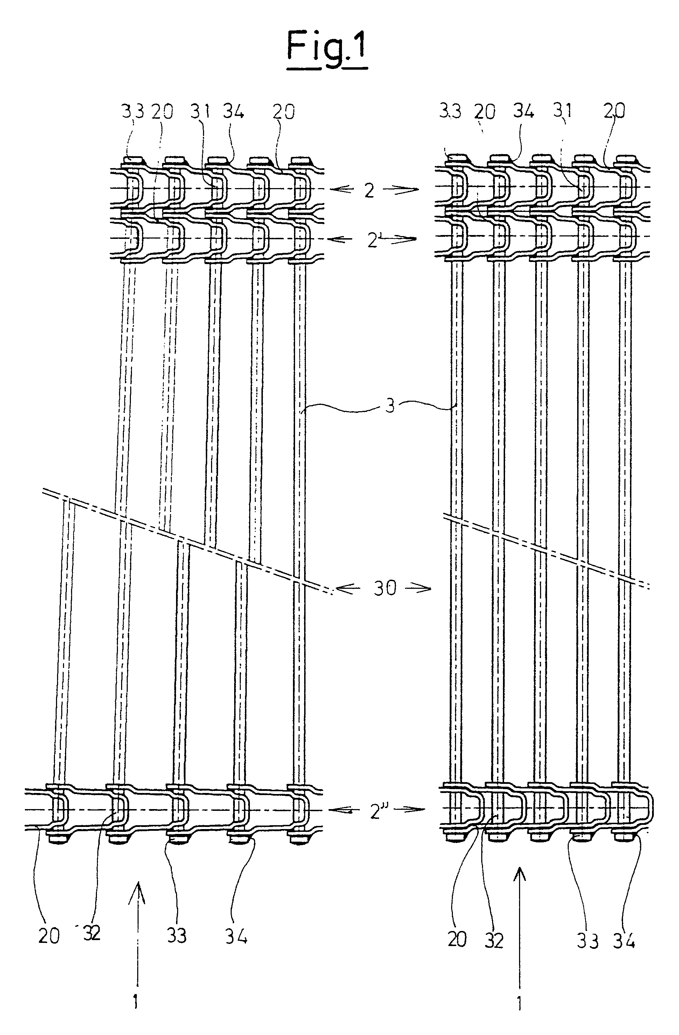

Wie die Figur 1 der Zeichnung zeigt, besteht das erste dargestellte Ausführungsbeispiel des Förderbandes 1 aus drei parallel verlaufenden Ketten 2, 2', 2'', von denen die Ketten 2, 2' als Doppelkette direkt nebeneinander an der einen Förderband-Längsseite verlaufen, während die dritte Kette 2'' in Abstand dazu parallel an der anderen Förderband-Längsseite verläuft. Quer zu den Ketten sind Tragstäbe 3 angeordnet, welche mit ihren Enden 31, 32 die Kettenglieder 20 der Doppelkette 2, 2' bzw. Einzelkette 2'' von innen nach außen durchdringen und dort in einem verdickten Kopf 33 enden, welcher ein Herausrutschen der Tragstäbe 3 aus den Kettengliedern 20 verhindert. Der mittlere Bereich der Tragstäbe 3 bildet die Tragfläche 30. Wie aus Figur 1 ersichtlich ist, sind die Tragstabenden 31 nur lose durch die Glieder 20 der Doppelkette 2, 2' geführt und mittels des Kopfes 33 gegen ein Herausrutschen gesichert. Die Tragstabenden 32 sind zusätzlich über einen Schweißpunkt 34 mit ihren Endköpfen 33 fest mit der Außenkante der Kettenglieder 20 der Einzelkette 2'' verbunden.

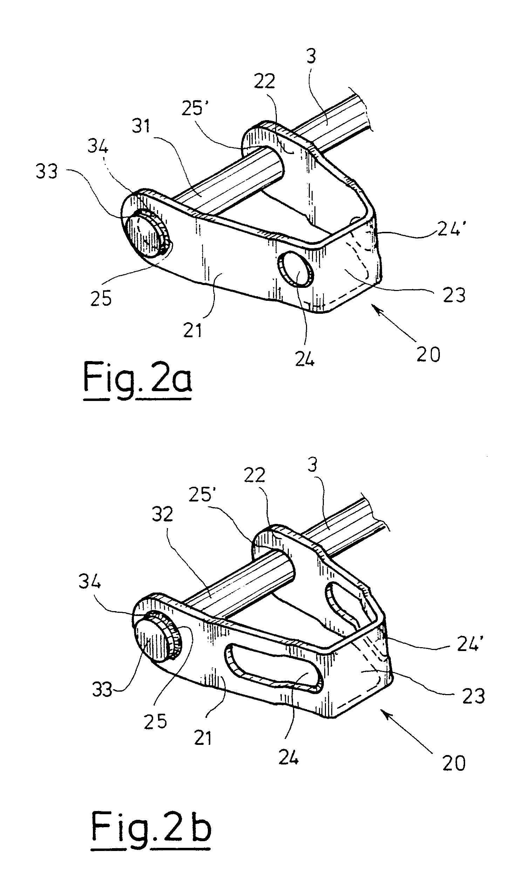

Wie aus Figur 2a und Figur 2b hervorgeht, sind die Kettenglieder 20 der Doppelkette 2, 2' und die Kettenglieder 20 der Einzelkette 2'' unterschiedlich gestaltet. Die Kettenglieder 20 der Doppelkette, dargestellt in Figur 2a, bestehen aus U-förmigen Streifen mit zwei Schenkeln 21, 22 und einem Verbindungsbogen 23. Die Schenkel 21, 22 weisen zwei Paare mit je zwei fluchtenden, kreisrunden Durchbrüchen 24, 24', 25, 25' auf, von denen das eine Paar 25, 25' sich am hinteren Schenkelende befindet und das andere Paar 24, 24' am vorderen Ende nahe dem Verbindungsbogen 23. Wie aus Figur 2a ersichtlich ist, durchdringt der Tragstab 3 mit seinem Ende 31 das Kettenglied 20 und ist an dessen Außenschenkel 21 durch seinen verdickten Kopf 33 gegen ein Herausrutschen gesichert. Auch hier ist der Außenschenkel 21 mit dem Kopf 33 durch einen Schweißpunkt 34 verbunden.

Figur 2b zeigt ein Kettenglied 20 der Einzelkette 2, 2', welches gegenüber dem in Figur 2a gezeigten Kettenglied nur den Unterschied aufweist, daß die Durchbrüche des vorderen Paares 24, 24' als in Längsrichtung der Schenkel 21, 22 verlaufende Langlöcher ausgebildet sind. Wie die Figur 2b zeigt, durchdringt ein Tragstab 3 die Schenkel 21, 22 des Kettengliedes 20 mit seinem Ende 32, ist durch einen verdickten Kopf 33 gegen ein Herausrutschen gesichert und mit einem Schweißpunkt 34 fest mit der Außenseite des äußeren Schenkels 21 verbunden. Wie aus Figur 1 ersichtlich ist, durchdringen die Tragstabenden 31, 32 innerhalb der Schenkel 21, 22 aus Figur 2a und 2b die vorderen Durchbrechungen 24, 24' eines nachfolgenden Kettengliedes 20. Während die kreisrunden Durchbrechungen 24, 24', 25, 25' der Kettenglieder 20 der Doppelkette 2, 2' auch in Krümmungen einen konstanten Tragstababstand gewährleisten und so auch in einem Innenradius einen Antrieb mittels Kettenrädern ermöglichen, ermöglichen die Langlöcher 24, 24' aus Figur 2b eine einseitige Vergrößerung des Tragstababstandes und somit eine Anpassung an den größeren Außenradius in einer Kurve. Hier kann somit das Förderband in den Kurven beidseitig angetrieben werden, wobei die zum Antrieb dienenden Kettenräder wegen der unterschiedlichen Geschwindigkeiten am Außen- bzw. Innenradius unterschiedliche Durchmesser aufweisen oder mit unterschiedlichen Winkelgeschwindigkeiten angetrieben werden.

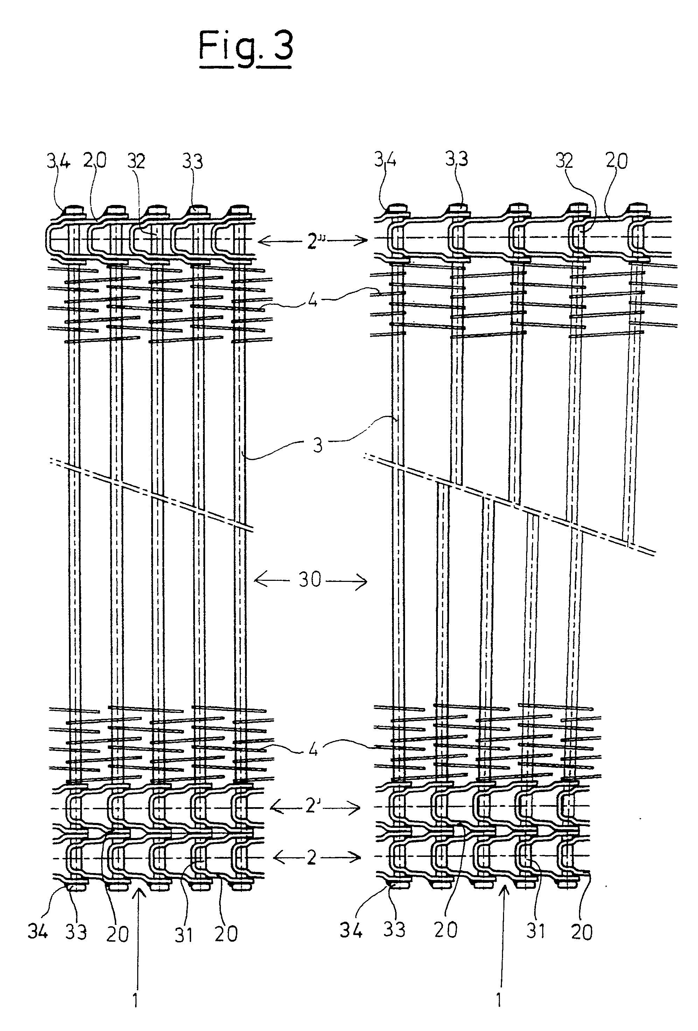

In Figur 3 wird eine andere Ausführungsform gezeigt, welche sich von der vorhin beschriebenen dadurch unterscheidet, daß die Tragstäbe 3 in ihrem den Tragbereich 30 bildenden Bereich mit einem Drahtgittergeflecht 4 überzogen sind.

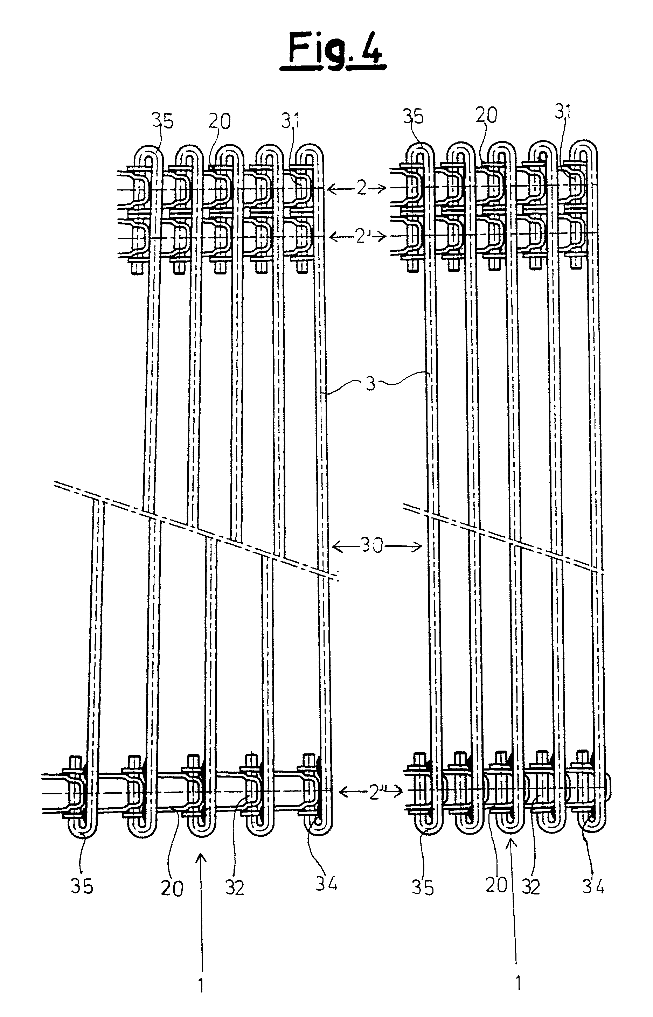

Figur 4 zeigt eine dritte Ausgestaltung des Förderbandes 1, welche sich von der in Figur 1 dargestellten dadurch unterscheidet, daß die Tragstäbe 3 auf der Oberfläche der Ketten 2, 2', 2'' aufliegen, über diese nach außen hinausreichen und mit ihren Enden 31, 32 über U-förmige Krümmungen 35 die Kettenglieder 20 von außen durchdringen. Die Schweißpunkte 34, welche die Tragstabenden 32 starr mit den Kettengliedern 20 der Einzelkette 2, 2' verbinden, sind in dieser Ausgestaltung an den Auflagepunkten der Tragstäbe 3 auf den Kettengliedern 20 angebracht, welche sie von außen durch die hinteren Rund-Löcher 25, 25' durchdringen. Dadurch wird zusätzlich zu der effektiven Antriebsmöglichkeit erreicht, daß die Tragfläche 30 wesentlich vergrößert und das maschinelle Auf- und Abschieben von Gütern erleichtert wird.

Bei den hier beshriebenen Förderbändern bestehen die Kettenglieder 20 und die Tragstäbe 3 aus Metall, vorzugsweise korrosionsfreiem Edelstahl. Alternativ können die Kettenglieder 20 und Tragstäbe 3 der Förderbänder auch aus Kunststoff, bevorzugt mit Glasfaserverstärkung, bestehen.

**Patentansprüche**

1. Förderband, bestehend aus wenigstens zwei zueinander parallelen, endlos umlaufenden, durch Kettenräder antreibbaren Ketten mit jeweils einer Anzahl von einander übergreifenden Kettengliedern sowie aus einer Anzahl von quer zu den Ketten angeordneten Tragstäben, wobei die Enden der Tragstäbe als Scharnierstifte für die Kettenglieder dienend diese durchdringen und wobei der dazwischen liegende Bereich der Tragstäbe als Tragbereich des Förderbandes dient,
dadurch gekennzeichnet,
- daß zwei Ketten (2, 2') als Doppelkette direkt nebeneinander verlaufend die eine Längsseite des Förderbandes (1) bilden,

- daß eine dritte Kette (2") als Einzelkette die andere Längsseite des Förderbandes (1) bildet,
- daß die Doppelkette (2, 2') eine feste Teilung aufweist und
- daß die Einzelkette (2") eine veränderliche Teilung mit in Förderbandlängsrichtung begrenzt gegeneinander verschieblichen Kettengliedern (20) aufweist.

2. Förderband nach Anspruch 1, dadurch gekennzeichnet, daß die Kettenglieder (20) der Einzelkette (2") je ein vorderes und ein hinteres Paar fluchtender Scharnierdurchbrechungen (24, 24', 25, 25') für die Tragstäbe (3) aufweisen, von denen das in Bewegungsrichtung gesehen vordere Durchbrechungspaar (24, 24') als sich in Laufrichtung des Förderbandes erstreckendes Paar von Langlöchern und das andere Durchbrechungspaar (25, 25') als Paar von Rundlöchern ausgebildet ist.

3. Förderband nach wenigstens einem der Ansprüche 1 oder 2, dadurch gekennzeichnet, daß die Tragstäbe (3) an ihren Enden (31, 32) verdickte Köpfe (33) aufweisen.

4. Förderband nach wenigstens einem der Ansprüche 1 bis 3, dadurch gekennzeichnet, daß die Köpfe (33) an den die Glieder (20) der Einzelkette (2") durchdringenden Tragstabenden (32) fest mit jeweils einem der beiden durchdrungenen Kettenglieder (20) verbunden sind.

5. Förderband nach wenigstens einem der Ansprüche 1 bis 4, dadurch gekennzeichnet, daß im Tragbereich (30) ein Drahtgittergeflecht (4) über die Tragstäbe (3) gezogen ist.

6. Förderband nach wenigstens einem der Ansprüche 1 bis 5, dadurch gekennzeichnet, daß die Tragstäbe (3) an ihren Enden (31, 32) U-förmig gebogen über die Ketten (2, 2', 2") hinausragen und diese mit ihren umgebogenen Enden von außen durchdringen.

7. Förderband nach wenigstens einem der Ansprüche 1 bis 6, dadurch gekennzeichnet, daß das Förderband (1) bei geradlinigem Verlauf mittels wenigstens eines Doppelkettenrades einseitig über seine Doppelkette (2, 2') antreibbar ist.

8. Förderband nach wenigstens einem der Ansprüche 1 bis 7, dadurch gekennzeichnet, daß das Förderband (1) in Kurven beidseitig mittels wenigstens eines Kettenradpaares aus zwei Kettenrädern unterschiedlicher Teilung sowie unterschiedlicher Durchmesser oder Winkelgeschwindigkeiten antreibbar ist.

9. Förderband nach wenigstens einem der Ansprüche 1 bis 8, dadurch gekennzeichnet, daß die Kettenglieder (20) und/oder die Tragstäbe (3) aus Kunststoff, vorzugsweise mit Glasfaserverstärkung, bestehen.

10. Förderband nach wenigstens einem der Ansprüche 1 bis 9, dadurch gekennzeichnet, daß die Kettenglieder (20) und/oder die Tragstäbe (3) aus Metall, vorzugsweise Edelstahl, bestehen.

# Fig.1

Fig.2a

Fig.2b

# Fig.3

# Fig.4

Europäisches
Patentamt

**EUROPÄISCHER
RECHERCHENBERICHT**

Nummer der Anmeldung

**EP 91 10 7284**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 303 457   (ASHWORTH BROS.)<br>* Spalte 7, Zeile 47 - Spalte 10, Zeile 10; Ansprüche 1-16; Figuren 1-6 *<br>– – – | 1-3,5,7, 10 | B 65 G 17/06 |
| A | DE-A-2 808 052   (ASHWORTH BROS.)<br>* Seite 31, Zeilen 25 - 28; Figuren 1, 2 *<br>– – – | 1,4,9,10 | |
| D,A | DE-U-8 900 158   (JONGE POERINK)<br>* Figuren 1-4 *<br>– – – | 1,6 | |
| A | FR-A-1 451 518   (CHARVO)<br>* Figuren 1-5 *<br>– – – – – | 8 | |

| | | | RECHERCHIERTE SACHGEBIETE (Int. Cl.5) |
|---|---|---|---|
| | | | B 65 G |

Der vorliegende Recherchenbericht wurde für alle Patentansprüche erstellt

| Recherchenort | Abschlußdatum der Recherche | Prüfer |
|---|---|---|
| Berlin | 08 August 91 | SIMON J J P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

\-\-\-\-\-\-\-\-\-\-\-\-\-\-\-\-\-\-\-\-\-\-\-\-\-

& : Mitglied der gleichen Patentfamilie, übereinstimmendes Dokument